Europäisches Patentamt

European Patent Office

Office européen des brevets

(11) Publication number: 0 317 328
A1

# EUROPEAN PATENT APPLICATION

(21) Application number: 88310895.3

(22) Date of filing: 18.11.88

(51) Int. Cl.4: **A 01 K 91/00**
A 01 K 91/06

(30) Priority: 20.11.87 GB 8727225

(43) Date of publication of application:
24.05.89 Bulletin 89/21

(84) Designated Contracting States:
AT BE CH DE ES FR GB GR IT LI LU NL SE

(71) Applicant: RYOBI MASTERLINE LIMITED
Cotteswold Road
Tewkesbury Gloucestershire GL20 5DJ (GB)

(72) Inventor: Vaughan, Bruce Vincent
67 Meadow Way
Yarnton Oxfordshire OX5 1TA (GB)

(74) Representative: Cooke, William Douglas et al
Hughes Clark & Co. 63 Lincoln's Inn Fields
London WC2A 3JU (GB)

(54) Fishing line and dispensing container.

(57) A fishing line comprises a leader line (14) with relatively short dropper lines (16) attached at spaced points along its length by knots, glue or welding. The line is coiled on a tube (12) in a container (10) and is withdrawn through an aperture (22) while passing through a foam pad (24) impregnated with leader sink preparation. A bottle (18) contains such a preparation.

FIG.1.

EP 0 317 328 A1

## Description

This invention relates to fishing line and to a dispensing container for the fishing line.

It is known to tie so-called "dropper lines" at intervals along a leader line but these have hitherto been tied by hand by the fisherman and have been sold as short single lengths of leader line with one or more dropper lines ready attached.

In one aspect, the present invention provides an article of manufacture for supply to fishermen which is a fishing line comprising a relatively long leader line having a multiplicity of attached relatively short dropper lines branching therefrom.

For supply to fly fishermen the line may typically have a breaking strain of 2.5 - 40 lbs, the droppers being similar, and may be supplied in lengths of about 25 metres. For use as long lines by professional fishermen, a somewhat greater breaking strain of up to 500 lbs may be required and substantially greater lengths of line are involved.

The dropper lines may be formed by knotting loops in the leader line and cutting the leader line adjacent the knots. The knots may be of the blood knot or blood bight kind and formed by:

(a) doubling the line back on itself to form a strand;

(b) doubling the strand of line and twisting the doubled strand; and

(c) passing the doubled strand carrying the loop through the loop of doubled strand.

The loop of strand protruding through the resulting knot is then cut to form a dropper. The use of blood bights or similar knots lends itself to machine manufacture. Alternatively the droppers can be welded or glued to the leader line, welding being preferred, but gluing being an alternative in materials where welding is difficult or impossible.

Various embodiments of the invention are illustrated in the attached drawings, in which:

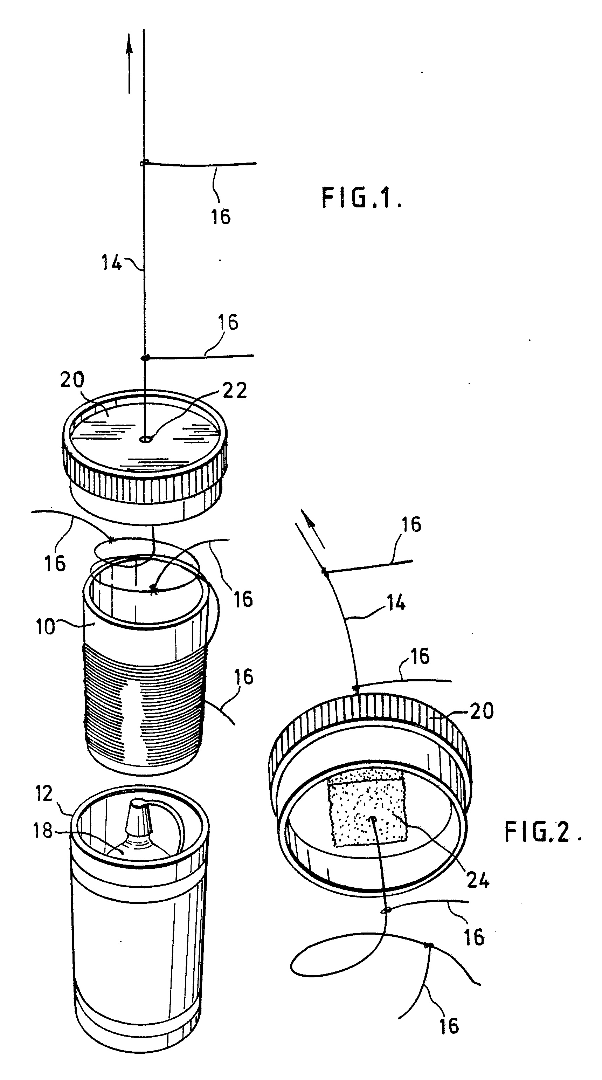

Figure 1 is an exploded view of a dispensing container according to the invention;

Figure 2 is an underneath perspective view of a lid of the container of Figure 1;

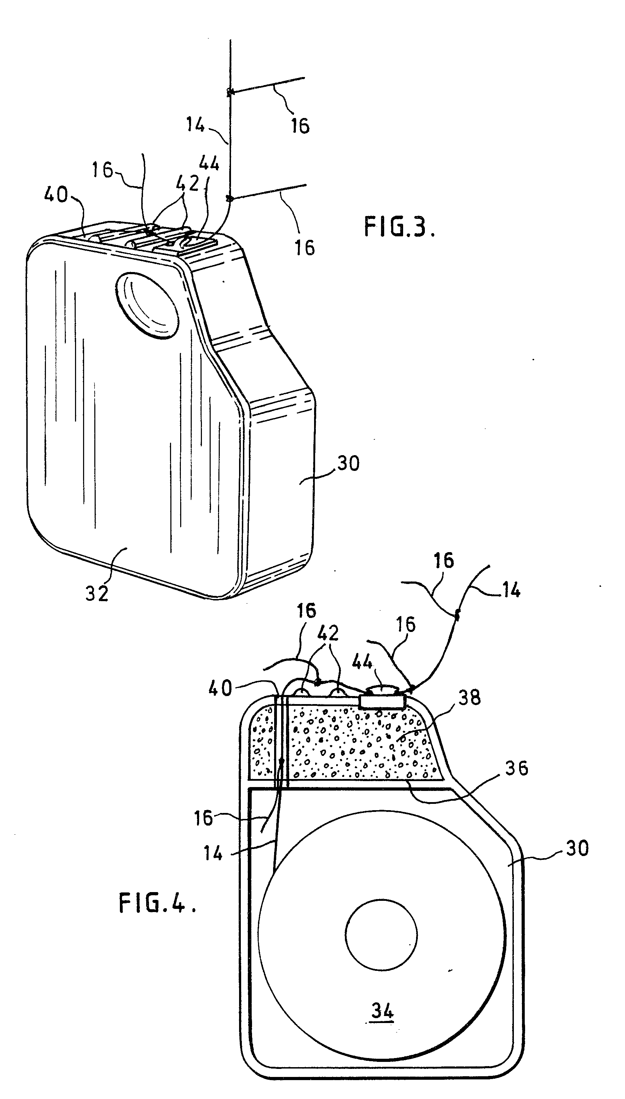

Figure 3 is a perspective view of a second form of the container and lid; and

Figure 4 is a plan of the container with its lid removed.

In the drawings, an inner tube 10 fits into a plastics container or tub 12. A length of fisherman's leader line 14 of plastics monofilament or braid is coiled onto the inner tube 10 and is provided at intervals with knotted-on dropper lines 16 which form abbreviated branches of the leader line 14. The dropper lines 16 may typically be 1 metre long and occur at intervals of about I metre. They may be attached to the leader line by welding or gluing as an alternative to knotting. Optionally a bottle of so-called leader sink preparation 18 fits within the tub 12 inside the inner tube 10. The tub 12 is closed by a plastics lid 20 having a central through-hole 22 through which the leader line 14 passes. On the inner face of the lid 20 is provided a pad 24 of plastics foam for impregnation with leader sink preparation.

In use, the lid 20 is removed and leader sink preparation is applied to the pad 24, after which the leader 14 can be pulled through the through-hole 22 as required. The length of line coiled onto the tube 10 provides sufficient to make a number of leaders. Thus there may typically be provided 20 metres of line 14 on the tube 10.

In the second form, a box-like container has a body 30 closed by a removable clip-on lid 32 and housing a spool 34 which is rotatably held in a compartment defined by an internal wall 36. Line 14 passes from the spool 34 through an aperture in the wall 36 to a second compartment that houses a foam pad 38 which may be treated with leader sink preparation and through which the line 14 passes to an aperture 40 of a peripheral wall of the body 30. Line 14 withdrawn from the aperture 40 can be passed over a pair of external ribs 42 and thence to a cutter 44 for severing lengths of withdrawn line. The tangential withdrawal of line 14 from the spool 34 which is free to revolve as the leader line 14 is withdrawn from the dispenser minimises tangling of the line and the ribs 42 prevent the cut line 14 from sticking to the body 30 of the dispenser when wet, enabling it always to be picked up with ease.

## Claims

1. A fishing line as an article of manufacture for supply to fishermen, the fishing line comprising a relatively long leader line (14), characterised in that a plurality of attachment items are distributed at spaced intervals along said leader line for the attachment respectively thereto of relatively short dropper lines (16) branching from said leader line, and a plurality of said dropper lines are secured at said attachment items.

2. A fishing line according to Claim 1, characterised in that said attachment items are knots formed by knotting loops in said leader line and then cutting each said loop adjacent its respective knot.

3. A fishing line according to Claim 2, characterised in that each said knot is a blood knot.

4. A fishing line according to Claim 2, characterised in that each said knot is a blood bight.

5. A fishing line according to Claim 1, characterised in that said leader line and said dropper lines are of thermoplastics material and said attachment items are formed by welds between said leader line and said dropper lines.

6. A fishing line according to Claim 1, characterised in that said attachment items are formed by areas of glue between said leader line and said dropper lines.

7. A pack for fishing line comprising a dispensing container (10, 20, 30) formed with an aperture (22, 40), and a coil of fishing line (14) within said container having an end thereof passing through said aperture characterised in that relatively short branch lines (16) are attached at spaced intervals along said fishing line to be dispensed with said fishing line through said aperture.

8. A pack according to Claim 8, characterised in that said dispensing container comprises a plastics tub (10) and a lid (20) formed with said aperture and closing said tub, the pack further including a pad (24) of foam material attached to an inner face of said lid for application of leader sink preparation to said fishing line and to said branch lines as they are dispensed through said aperture.

9. A pack according to Claim 7, characterised in that said container is formed with a partition (36) formed with a second aperture and dividing said container into first and second compartments, the pack further including a spool (34) carrying said coil, said spool being rotatably mounted in said first compartment for said fishing line to pass tangentially therefrom and through said second aperture, then through said second compartment to said first-mentioned aperture.

10. A pack according to Claim 9, characterised in that it includes a pad (38) of sponge material mounted in said second compartment and formed for said fishing line to pass therethrough in travelling from said second aperture to said first-mentioned aperture.

11. A pack according to Claim 9, characterised in that it includes a cutter (44) mounted outside said container for severing lengths of said fishing line after passing through said first-mentioned aperture.

FIG.1.

FIG.2.

FIG.3.

FIG.4.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | GB-A-1 177 706  (BRENT LTD)<br>* complete document * | 1 | A 01 K  91/00<br>A 01 K  91/06 |
| A | | 2 - 4 | |
| X | US-A-2 835 069  (A.J. FLYE, SR)<br>* figures * | 1 | |
| A | EP-A-0 068 750  (NORDCO LTD)<br>* figure 7 * | 7 | |

TECHNICAL FIELDS
SEARCHED (Int. Cl.4)

A 01 K  91/00

The present search report has been drawn up for all claims

| Place of search | Date of completion of the search | Examiner |
|---|---|---|
| BERLIN | 08-02-1989 | WUNDERLICH J E |